# EUROPEAN PATENT APPLICATION

(11) **EP 4 550 534 A1**
(43) Date of publication of application: **07.05.2025**
(21) Application number: 24183445.6
(22) Date of filing: 20.06.2024
(51) Int. Cl.: H01M 50/103, H01M 50/105, H01M 50/107, H01M 50/15, H01M 50/152, H01M 50/169

(54) **END COVER, BATTERY CELL, BATTERY, AND ELECTRIC APPARATUS**

(30) Priority: 31.10.2023 CN 202322940675 U
(71) Applicant: Contemporary Amperex Technology (Hong Kong) Limited, Central, Central And Western District (HK)
(72) Inventor: LIN, Denghua, Ningde, 352100 (CN); XIE, Yongfeng, Ningde, 352100 (CN); CAO, Mengkai, Ningde, 352100 (CN); HUANG, Shoujun, Ningde, 352100 (CN); CHEN, Xinxiang, Ningde, 352100 (CN); ZHENG, Yulian, Ningde, 352100 (CN); WANG, Peng, Ningde, 352100 (CN); JIN, Haizu, Ningde, 352100 (CN)
(74) Representative: Gong, Jinping

(57) **Abstract**

This application provides an end cover (12), a battery cell (600), a battery (100), and an electric apparatus. The battery cell (600) includes a shell (11), an electrode assembly (20), and an end cover (12), and an opening (K) is provided at an end of the shell (11) in a first direction (X), and the electrode assembly (20) is accommodated in the shell (11). The end cover (12) is configured to cover the opening (K). The end cover (12) includes an end cover body (121) located in a projection of the opening (K) in the first direction (X). The end cover (12) is welded to the shell (11) to form a weld pool structure (R). In a radial direction (Y) of the opening (K), the weld pool structure (R) is exposed on an outer surface of the shell (11) and penetrates deep into the end cover body (121). In an embodiment of this application, a laser needs to be irradiated from an outer peripheral side of the shell (11) to the vicinity of a boundary position between the shell (11) and a protrusion (122) along the radial direction (Y) of the shell (11), so that the formed weld pool structure (R) can include most or even the entire structure of the protrusion (122), a partial structure of the shell (11), and a partial structure of the end cover body (121). This helps to increase an overall size of the weld pool structure (R) and improve the welding strength between the shell (11) and the end cover (12).

## Description

### TECHNICAL FIELD

This application relates to the field of battery technologies, and in particular, to an end cover, a battery cell, a battery, and an electric apparatus.

### BACKGROUND

Battery cells are widely used in electronic devices such as mobile phones, laptops, electric bicycles, electric vehicles, electric aircrafts, electric ships, electric toy cars, electric toy ships, electric toy aircrafts, and electric tools. Battery cells may include nickel-cadmium battery cells, nickel-hydrogen battery cells, lithium-ion battery cells, secondary alkaline zinc-manganese battery cells, and the like.

However, during use, the electrode assembly inside a battery cell swells and transfers a corresponding swelling stress to the housing, leading to a risk of cracking the housing and affecting the reliability of the battery cell.

### SUMMARY

In view of the preceding problem, this application provides an end cover, a battery cell, a battery, and an electric apparatus, so as to improve the reliability of the battery cell.

According to a first aspect, an embodiment of this application provides a battery cell including a shell, an electrode assembly, and an end cover, where an opening is provided at an end of the shell in a first direction, and the electrode assembly is accommodated in the shell. The end cover is configured to cover the opening. The end cover includes an end cover body located in a projection of the opening in the first direction. The end cover is welded to the shell to form a weld pool structure. In a radial direction of the opening, the weld pool structure is exposed on an outer surface of the shell and penetrates deep into the end cover body.

In the foregoing solution, a laser needs to be irradiated from an outer peripheral side of the shell to the vicinity of a boundary position between the shell and the end cover along the radial direction of the shell. This design allows the formed weld pool structure to penetrate deep into the end cover body, which means that the weld pool structure can include a partial structure of the end cover body, helping to increase an overall size of the weld pool structure and improve the welding strength between the shell and the end cover. In addition, at least part of a zone with a fragile strength in the vicinity of the weld pool structure can be located on the end cover body, and since the end cover body usually has a large thickness and strength, this helps to reduce the risk of cracking or even fracturing in the zone with a fragile strength in the vicinity of the weld pool structure and improve the reliability and service life of the battery cell.

In some embodiments, in a direction from the outer surface of the shell to an inner surface of the shell, the weld pool structure tends to decrease gradually in size.

In the foregoing solution, compared with an solution in the related art in which a weld pool structure penetrates deep into the shell in the first direction, this design can reduce the impact of the weld pool structure on the shell, thereby reducing the exposed size of the weld pool structure on the outer surface of the shell, improving the flatness of the outer surface of the shell, and improving the appearance of the battery cell. In addition, in the direction from the outer surface of the shell to the inner surface of the shell, the weld pool structure tends to decrease gradually in size, which therefore helps to reduce a structural size of the weld pool structure extending to the deep center of the end cover body, thereby reducing the impact of the weld pool structure on the central position of the end cover body and improving the structural reliability of the end cover body.

In some embodiments, the shell includes a first plate body, the first plate body is fixed to the end cover, and the weld pool structure is arranged beyond an inner surface of the first plate body. In the radial direction of the opening, a largest size of the weld pool structure is denoted as H1, a size of the first plate body is denoted as H2, and H1 and H2 satisfy that H2 + 0.15 mm ≤ H1 ≤ 3 mm.

In the foregoing solution, H1 is set to be not less than H2 + 0.15 mm, so that the weld pool structure can penetrate deep into the end cover body, thereby implementing the weld fusion between the end cover body and the first plate body and improving the reliability of the battery cell. In addition, in the embodiments of this application, H1 is set to be not greater than 3 mm, so as to reduce a risk of serious deformation of the welded shell caused by excessive energy input during welding due to an excessive penetration depth of the weld pool structure, and improve the structural reliability of the shell in the battery cell.

In some embodiments, in the radial direction of the opening, a distance between an outer surface of the end cover body facing the first plate body and an outer surface of the first plate body is denoted as H3, and H2 and H3 satisfy that H3 ≤ H2 + 0.5 mm.

In the foregoing solution, a size of a gap space formed between the end cover body and the first plate body in the radial direction is set to be not greater than 0.5 mm, so as to reduce the risk of a liquid molten structure falling off in the gap space during the melting process, reduce the adverse impact of the welding process on the electrode assembly, and help to improve the structural reliability of the finally formed weld pool structure in the gap space, thereby improving welding strength between the end cover and the shell.

In some embodiments, the shell includes a first plate body, the first plate body is fixed to the end cover, and the weld pool structure extends to an upper surface of the end cover far away from the shell. In the radial direction of the opening, a size of the first plate body is denoted as H2. In the first direction, the largest size of the weld pool structure is denoted as L1, the largest size of the end cover body is denoted as L3, and L1, L3 and H2 satisfy that L1 ≤ L3 + 2H2.

In the foregoing solution, L1 is set to be not greater than L3 + 2H2, so as to reduce the risk of the liquid molten structure formed during the welding flowing to a side of the end cover body facing the electrode assembly, reduce the impact of the welding process on the electrode assembly and other parts, and improve the preparation yield of battery cells.

In some embodiments, the shell includes a first plate body and a second plate body, where the first plate body is located on a side of the second plate body close to the opening, the weld pool structure is partially located in the first plate body, and thickness of the first plate body is greater than that of the second plate body.

In the foregoing solution, the structure of the shell is adjusted so that the thickness of the first plate body used for welding in the shell is greater than that of the second plate body, which can improve the welding strength between the shell and the end cover and improve the reliability of the battery cell.

In some embodiments, in the first direction, the first plate body is located on a side of the electrode assembly facing the opening.

In the foregoing solution, the first plate body is arranged on the side of the electrode assembly facing the opening K in the first direction, so that the first plate body and the electrode assembly are located at positions of different heights in the first direction, thereby reducing the probability of contact between the electrode assembly and the first plate body due to the swelling of the electrode assembly, reducing the risk of stress concentration at the first plate body, and improving the use reliability of the battery cell.

In some embodiments, an inner surface of the first plate body is arranged beyond an inner surface of the second plate body, in the first direction, a size of the first plate body is denoted as L5, and L5 satisfies that L5 ≤ 10 mm.

In the foregoing solution, L5 is set to be not greater than 10 mm, which reduces the risk of contact interference between the electrode assembly and the first plate body due to the swelling of the electrode assembly, thereby reducing the probability of stress concentration between the electrode assembly and the first plate body, further reducing the probability of occurrence of lithium precipitation, and improving the use reliability of the battery cell.

In some embodiments, an outer surface of the first plate body is arranged beyond an outer surface of the second plate body, in the first direction, a size of the first plate body is denoted as L5, and L5 satisfies that L5 ≤ 15 mm.

In the foregoing solution, the size of the first plate body in the first direction is limited so that L5 is not greater than 15 mm, thereby reducing the risk of collision and interference between some structures of the first plate body protruding outward and other external components and improving the use reliability of the battery cell.

In some embodiments, the thickness of the first plate body is denoted as H2, the thickness of the second plate body is denoted as H4, and H2 and H4 satisfy that H4 < H2 ≤ 1.8H4.

In the foregoing solution, the thickness H2 of the first plate body is set to be greater than the thickness H4 of the second plate body, which can improve the welding strength between the shell and the end cover and improve the reliability of the battery cell. In addition, H2 is also set to be not greater than 1.8H4, so as to meet the feasibility of forming the first plate body and the second plate body and reduce the difficulty of preparing the shell.

In some embodiments, a structure of the weld pool structure located in the shell is not arranged beyond the first plate body.

In the foregoing solution, the structure of the weld pool structure located in the shell is not arranged beyond the first plate body, which means that the weld pool structure does not extend into the second plate body. In this case, when the electrode assembly swells, cracks are more likely to occur in the first plate body, and the cracks generated need to penetrate through the first plate body in the radial direction to break the shell. Therefore, this design helps to increase a crack path length corresponding to the cracks caused by the swelling of the electrode assembly in the vicinity of the weld pool structure and improve the use reliability of the battery cell.

In some embodiments, the shell includes a first side plate, a second side plate, and a connecting plate connecting the first side plate and the second side plate, that are arranged in a circumferential direction, and the connecting plate includes an arc structure. The first side plate includes a first plate body and a second plate body, the first plate body being located on a side of the second plate body close to the opening; the second side plate includes a third plate body and a fourth plate body, the third plate body being located on a side of the fourth plate body close to the opening; and the connecting plate includes a fifth plate body and a sixth plate body, the fifth plate body being located on a side of the sixth plate body close to the opening; where thickness of the first plate body is greater than that of the second plate body; and/or thickness of the third plate body is greater than that of the fourth plate body; and/or thickness of the fifth plate body is greater than that of the sixth plate body.

In the foregoing solution, at least one of the first plate body, the third plate body, and the fifth plate body can be selectively thickened according to the different positions of the weak zones on the shell, so as to reinforce the strength of the shell. In addition, compared with a solution of overall thickening of the shell, only partial thickening is adopted in the embodiments of this application, which helps to reduce material waste and the occupation of the space for the electrode assembly.

In some embodiments, thickness of the first plate body is greater than that of the second plate body; and/or thickness of the third plate body is greater than that of the fourth plate body; and/or thickness of the fifth plate body is greater than that of the sixth plate body.

In the foregoing solution, a thickness difference between the first plate body and the second plate body is a size of the thickening of the first plate body relative to the second plate body. On this basis, setting the size of the thickening of the first plate body to be equal to a size of the thickening of the third plate body can reduce the difficulty of preparing the first plate body and the third plate body. Alternatively, the size of the thickening of the first plate body can be set to be equal to a size of the thickening of the fifth plate body, which helps to reduce the difficulty of preparing the first plate body and the fifth plate body.

In some embodiments, the shell includes a first plate body, the first plate body is fixed to the end cover, and thickness of the end cover body is greater than that of the first plate body.

In the embodiments of this application, due to the thickness of the end cover body being greater than that of the first plate body, the end cover body can have greater structural strength than the first plate body. On this basis, in the embodiments of this application, the welding mode changes, and the morphology of the weld pool structure changes, so that at least some zones with a fragile strength in the vicinity of the weld pool structure can be located on the end cover body, which helps to reduce the risk of cracking or even fracturing in the zones with a fragile strength in the vicinity of the weld pool structure and improve the reliability and service life of the battery cell.

According to a second aspect, an embodiment of this application provides an end cover of a battery cell. The end cover includes an end cover body and a protrusion, where the protrusion is arranged to protrude from an outer peripheral surface of the end cover body, and both the protrusion and the end cover body are configured for welding with the shell of the battery cell to form a weld pool structure.

According to a third aspect, an embodiment of this application provides a battery including the battery cell according to any one of the foregoing embodiments.

In some embodiments, the battery further includes a heat insulation pad disposed between adjacent battery cells, where the shell includes a first plate body and a second plate body, the first plate body being located on a side of the second plate body close to the opening, and an outer peripheral surface of the first plate body is arranged to protrude from an outer peripheral surface of the second plate body. A projection of at least a partial structure of the heat insulation pad in the first direction X is located between projections of two adjacent first plate bodies in the adjacent battery cells in the first direction.

In the foregoing solution, the heat insulation pad is disposed between adjacent battery cells, and the projection of at least a partial structure of the heat insulation pad in the first direction can be located between projections of first plate bodies in different battery cells in the first direction, so that the first plate bodies corresponding to different battery cells can be separated by the heat insulation pads, thereby reducing the risk of collision and damage between the first plate bodies corresponding to different battery cells.

In some embodiments, in the first direction, at least a partial structure of the first plate body is located on a side of the heat insulation pad; and/or the heat insulation pad is provided with a recess, and the first plate body is at least partially embedded in the recess.

In the foregoing solution, different first plate bodies can be spaced apart using the heat insulation pads, so as to reduce the risk of stress concentration between different first plate bodies.

According to a fourth aspect, an embodiment of this application provides an electric apparatus including the battery cell according to any one of the foregoing embodiments, where the battery cell is configured to supply electric energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic exploded structural view of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic cross-sectional structural diagram of a battery cell according to an embodiment of this application;
FIG. 6 is a schematic cross-sectional structural diagram of zone Q in FIG. 5;
FIG. 7 is a schematic partial cross-sectional structural diagram of a further battery cell according to an embodiment of this application;
FIG. 8 is a schematic partial cross-sectional structural diagram of a further battery cell according to an embodiment of this application;
FIG. 9 is a schematic diagram of assembly of adjacent battery cells in a battery module according to an embodiment of this application;
FIG. 10 is a schematic partial cross-sectional structural diagram of a battery module according to an embodiment of this application;
FIG. 11 is a schematic diagram of an enlarged structure of zone P in FIG. 10;
FIG. 12 is a schematic structural diagram of a shell of a battery cell according to an embodiment of this application;
FIG. 13 is a schematic diagram of an enlarged structure of zone O in FIG. 12;
FIG. 14 is a schematic structural diagram of an end cover according to an embodiment of this application; and
FIG. 15 is a schematic structural diagram of a partial structure in a further battery according to an embodiment of this application.

In the accompanying drawings:
1000. vehicle;
100. battery; 200. controller; 300. motor; 400. box; 41. first box portion; 42. second box portion; 43. accommodating portion; 500. battery module; 600. battery cell;
10. housing; 11. shell; 111. first plate body; 112. second plate body; 113. third plate body; 114. fourth plate body; 115. fifth plate body; 116. sixth plate body; 12. end cover; 121. end cover body; 122. protrusion;
20. electrode assembly;
30. heat insulation pad;
K. opening; R. weld pool structure; R1. first weld pool portion;
A. recess;
B1. first side plate; B2. second side plate; B3. connecting plate;
X. the first direction; and Y radial direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the embodiments of this application, battery cells may be secondary batteries. Secondary batteries refer to battery cells that can continue to be used after discharged because their active materials can be reactivated through recharging.

The battery cells may be lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, and the like. This is not limited in the embodiments of this application.

A battery cell generally includes an electrode assembly. The electrode assembly includes a positive electrode, a negative electrode, and a separator. During charging and discharging of the battery cell, active ions (for example, lithium ions) intercalated and deintercalated back and forth between the positive electrode and the negative electrode. The separator is sandwiched between the positive electrode and the negative electrode to prevent short circuit between the positive and negative electrodes and allow active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil current collector or a composite current collector. For example, aluminum or stainless steel with silver surface treatment, stainless steel, copper, aluminum, nickel, carbon electrode, carbon, nickel or titanium can be used as the metal foil. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, matrices of polypropylene, polyethylene terephthalate, polybutylene terephthalate, polystyrene, or polyethylene).

In an example, the positive electrode active material may include at least one of the following materials: lithium-containing phosphate, lithium transition metal oxide, or respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium-containing phosphate may include but are not limited to at least one of lithium iron phosphate (for example, LiFePO4 (LFP for short)), composite material of lithium iron phosphate and carbon, lithium manganese phosphate (for example, LiMnPO4), composite material of lithium manganese phosphate and carbon, lithium manganese iron phosphate, or composite material of lithium manganese iron phosphate and carbon.

In some embodiments, the negative electrode may be a negative electrode plate, and the negative electrode plate may include a negative electrode current collector.

In an example, the negative electrode current collector may be a metal foil, metal foam, or composite current collector. For example, aluminum or stainless steel with silver surface treatment, stainless steel, copper, aluminum, nickel, carbon electrode, carbon, nickel or titanium can be used as the metal foil. The metal foam may be nickel foam, copper foam, aluminum foam, alloy foam, carbon foam, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, matrices of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two opposite surfaces in a thickness direction of the negative electrode current collector, and the negative electrode active material is disposed on either or both of the two opposite surfaces of the negative electrode current collector.

In an example, the negative electrode active material may be negative electrode active materials well-known in the art and used for battery cells. In an example, the negative electrode active material may include at least one of the following materials: artificial graphite, natural graphite, soft carbon, hard carbon, a silicon-based material, a tin-based material, lithium titanate, and the like.

In some embodiments, the positive electrode current collector may be made of material aluminum, and the negative electrode current collector may be made of material copper.

In some embodiments, the electrode assembly further includes a separator disposed between the positive electrode and the negative electrode.

In some embodiments, the separator is a separation film. The separation film is not limited to any particular type in this application, and may be any well-known porous separator with good chemical stability and mechanical stability.

In an example, the separation film may be selected from at least one of glass fiber, nonwoven fabrics, polyethylene, polypropylene, polyvinylidene fluoride, and ceramics.

In some embodiments, the separator is a solid electrolyte. The solid electrolyte is disposed between the positive electrode and the negative electrode, and plays the roles of ion transmission and separation of the positive electrode from the negative electrode.

In some embodiments, the battery cell further includes an electrolyte, and the electrolyte plays a role of conducting ions between the positive electrode and the negative electrode. The electrolyte is not specifically limited to any particular type in this application, and may be selected based on needs. The electrolyte may be in a liquid state, a gel state, or a solid state.

In some embodiments, the electrode assembly is of a wound structure. The positive electrode plate and the negative electrode plate are wound into a wound structure.

In some embodiments, the electrode assembly is of a laminated structure.

In some embodiments, the shape of the electrode assembly may be cylindrical, flat, polygonal, or the like.

In some embodiments, the electrode assembly is provided with tabs, and the tabs can conduct current away from the electrode assembly. The tabs include a positive tab and a negative tab.

In some embodiments, the battery cell may include a housing. The housing is used for packaging components such as the electrode assembly and the electrolyte. The housing may be a steel housing, aluminum housing, plastic housing (such as polypropylene), composite metal housing (such as copper-aluminum composite housing), or aluminum-plastic film.

In some embodiments, functional components such as electrode terminals may be provided on the housing. The electrode terminal may be configured to be electrically connected to the electrode assembly for outputting or inputting electric energy of the battery cell.

In some embodiments, a current collecting member may be disposed in the housing, and the electrode assembly may be electrically connected to the housing or an electrode terminal disposed on the housing through the current collecting member.

In an example, the battery cell may be a cylindrical battery cell, prismatic battery cell, pouch battery cell, or battery cell of another shape. The prismatic battery cell includes a square battery cell, a blade battery cell, and a multi-prismatic battery cell, and the multi-prismatic battery cell is, for example, a hexagonal battery cell. This is not particularly limited in this application.

The battery mentioned in the embodiments of this application is a single physical module that includes one or more battery cells for providing a higher voltage and capacity.

In some embodiments, the battery may be a battery module. When there are a plurality of battery cells, the plurality of battery cells are arranged and fixed to form one battery module.

In some embodiments, the battery may be a battery pack. The battery pack includes a box and battery cells, with the battery cells or battery modules accommodated within the box.

In some embodiments, the box may be a part of a chassis structure of a vehicle. For example, a part of the box may be at least a part of the floor of the vehicle. Alternatively, a part of the box may be at least a part of cross members and roof rails of the vehicle.

In some embodiments, the battery may be an energy storage apparatus. Energy storage apparatuses include energy storage containers, energy storage cabinets, and the like.

During the preparation of battery cells, the end cover and shell of battery cell are usually connected and fixed through welding to form a housing. During use of the battery cell, the electrode assembly swells, and the welding zone is subjected to a certain swelling stress, which is likely to result in a risk of cracking of the housing at a position corresponding to the welding zone, thus causing a failure of the battery cell and affecting the reliability of the battery cell.

Based on the above technical problems, this application provides an end cover, a battery cell, a battery, and an electric apparatus. With the welding mode changed, the welding strength between the end cover and the shell is improved, the risk of cracking of the battery cell is reduced, and the service life and reliability of the battery cell are improved.

The technical solutions described in the embodiments of this application are applicable to batteries and various electric apparatuses using batteries. The electric apparatus, for example, is a mobile phone, a portable device, a laptop, an electric bicycle, an electric vehicle, a ship, a spacecraft, an electric toy, and an electric tool. The spacecraft, for example, is an airplane, a rocket, a space shuttle, and a spaceship. The electric toy, for example, includes a fixed or mobile electric toy, such as a game console, an electric toy car, an electric toy ship, and an electric toy airplane. The electric tool, for example, includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer.

The battery cell described in the embodiments of this application is not limited to be applied to the electric apparatuses described above. However, for ease of description, the following embodiments are all described by using an electric vehicle as an example.

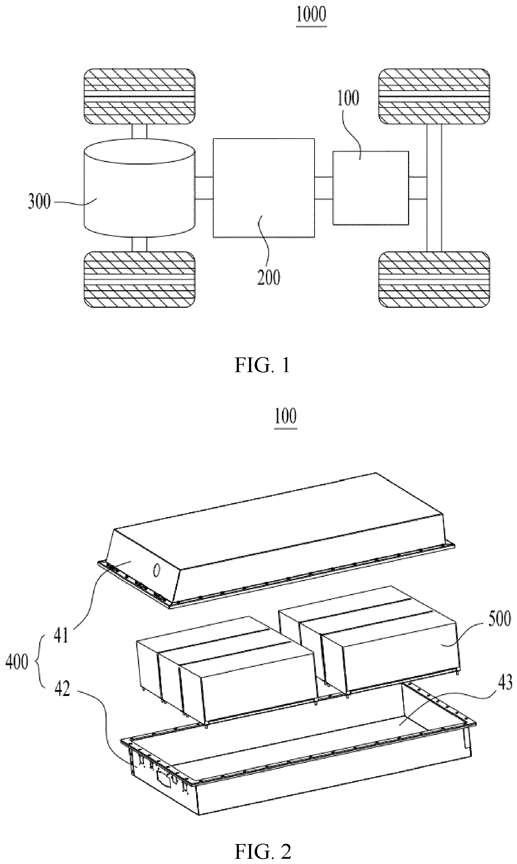

Refer to FIG. 1. FIG. 1 is a simple schematic diagram of a vehicle 1000 according to an embodiment of this application. The vehicle 1000 may be a fuel vehicle, a gas vehicle, or a new energy vehicle, where the new energy vehicle may be a battery electric vehicle, a hybrid electric vehicle, a range-extended vehicle, or the like. A battery 100 may be disposed in the vehicle 1000. In a specific example, the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300. The controller 200 is, for example, configured to control the battery to supply power to the motor 300. The battery may be configured to start and navigate the vehicle 1000. Certainly, the battery 100 may also be configured to drive the vehicle 1000, replacing all or part of the fossil fuel or the natural gas to provide driving power for the vehicle 1000.

FIG. 2 is a schematic exploded view of a battery according to some embodiments of this application. As shown in FIG. 2, the battery 100 includes a box 400 and battery cells (not shown in the figure), and the battery cells are accommodated in the box 400.

The box 400 is configured to accommodate the battery cells, and the box 400 may have various structures. In some embodiments, the box 400 may include a first box portion 41 and a second box portion 42. The first box portion 41 and the second box portion 42 fit together. The first box portion 41 and the second box portion 42 jointly define an accommodating portion 43 for accommodating the battery cells. The second box portion 42 may be a hollow structure with an opening formed at an end, the first box portion 41 is a plate-shaped structure, and the first box portion 41 covers the opening side of the second box portion 42 so as to form the box having the accommodating portion 43; and the first box portion 41 and the second box portion 42 may alternatively both be a hollow structure with an opening formed at an end, and the opening side of the first box portion 41 is engaged with the opening side of the second box portion 42 so as to form the box 400 having the accommodating portion 43. Certainly, the first box portion 41 and the second box portion 42 may be of various shapes, such as cylinder or cuboid.

There may be one or more battery cells in the battery 100. Under the condition that a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 400; or certainly, the battery may be formed by a plurality of battery cells being connected in series, parallel, or series-parallel first to form a battery module 500 and then a plurality of battery modules 500 being connected in series, parallel, or series-parallel to form an entirety, which is accommodated in the box 400.

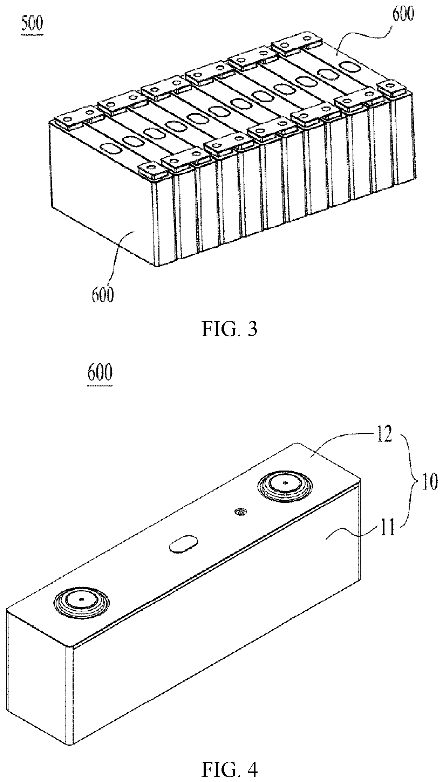

FIG. 3 is a schematic structural diagram of a battery module 500 shown in FIG. 2.

In some embodiments, as shown in FIG. 3, there are a plurality of battery cells 600, and the plurality of battery cells 600 are connected in series, parallel, or series-parallel to form a battery module 500. A plurality of battery modules 500 are then connected in series, parallel, or series-parallel to form an entirety which is accommodated in the box.

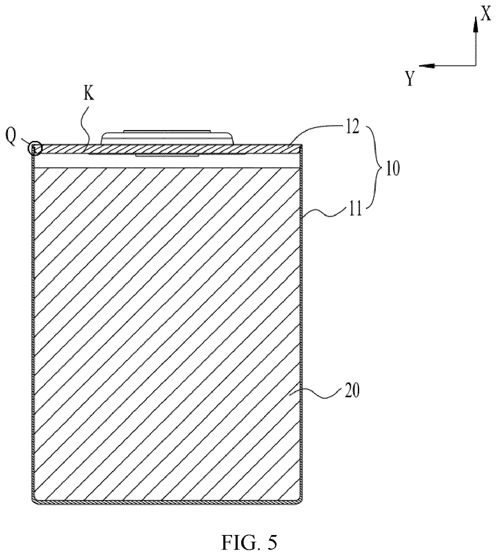

FIG. 4 is a schematic structural diagram of a battery cell. FIG. 5 is a schematic diagram of an internal structure of a battery cell. Next, the structure of the battery cell will be described with reference to the accompanying drawings.

Refer to FIG. 4 to FIG. 6. A battery cell 600 includes a shell 11, an electrode assembly 20, and an end cover 12. An opening K is provided at an end of the shell 11 in a first direction X, and the electrode assembly 20 is accommodated in the shell 11. The end cover 12 is configured to cover the opening K. The end cover 12 includes an end cover body 121, and a projection of the end cover body 121 in the first direction X is located in a projection of the opening K in the first direction X. The end cover 12 is welded to the shell 11 to form a weld pool structure R. In a radial direction Y of the opening K, the weld pool structure R is exposed on an outer surface of the shell 11 and penetrates deep into the end cover body 121.

The shell 11 is fixed to the end cover 12 through welding to and the two together form a housing 10. The housing 10 has a hollow structure and is configured to form an accommodating space for accommodating the electrode assembly 20 and other components. The end cover 12 includes an end cover body 121. Further, the description of "the end cover 12 includes an end cover body 121 located in a projection of the opening K in the first direction X" mentioned in an embodiment of this application means that in the first direction X, the projection of the end cover body 121 is located in the projection of the opening K. The first direction X may be the thickness direction of the end cover body 121.

The electrode assembly 20 is a main component in the battery cell 600 for supplying electric energy, and shapes of the shell 11 and the end cover 12 may be determined based on a shape of the electrode assembly 20. For example, if the electrode assembly 20 is a cylindrical structure, the shell 11 is shaped as a cylindrical structure, and the projection of the end cover body 121 in the first direction X has a circular or circular-like structure. If the electrode assembly 20 is of a cuboid structure, the shell 11 is shaped as a cuboid structure, and the projection of the end cover body 121 in the first direction X has a rectangular or rectangular-like structure.

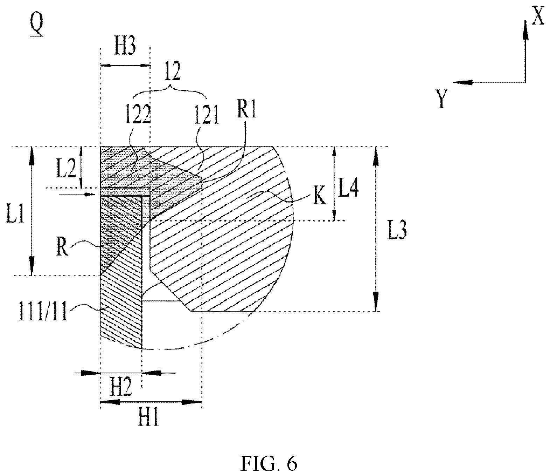

The end cover 12 is welded to the shell 11 to form a weld pool structure R, where a partial structure of the end cover 12 and a partial structure of the shell 11 can be fused into an entirety in the welding process to form the weld pool structure R. Specifically, Refer to FIG. 6. FIG. 6 shows a structure of the end cover 12 before welded and a relative relationship between the end cover 12 and the weld pool structure R. For example, the end cover 12 may include a protrusion 122 in addition to the end cover body 121, and the protrusion 122 is arranged to protrude from an outer peripheral surface of the end cover body 121. At least a partial structure of the protrusion 122 and a partial structure of the end cover body 121 are fused into an entirety with a partial structure of the shell 11, thereby forming the weld pool structure R.

The shape and size relationship between the protrusion 122 and the end cover body 121 is not limited in the embodiments of this application. For example, cross-sectional shapes of the protrusion 122 and the end cover body 121 may be T-shaped, and when a projection of the end cover body 121 in its thickness direction is a circle, a projection of the protrusion 122 in the thickness direction of the end cover body 121 may be of a circular ring structure. When the projection of the end cover body 121 in its thickness direction is rectangular, the projection of the protrusion 122 in the thickness direction of the end cover body 121 may be of a rectangular ring structure.

In the related art, the welding between the shell 11 and the end cover 12 can be implemented using a laser, and the laser usually irradiates the protrusion 122 in the first direction X from a side of the end cover 12 facing away from the electrode assembly 20, so that a partial structure of the protrusion 122 is fused with the shell 11 to form the weld pool structure R, enabling the end cover 12 to be fixed to the shell 11 through welding. However, this welding mode usually is only able to fix the protrusion 122 to the shell 11 through welding, and the end cover body 121 is not directly fixed to the shell 11 by fusing. In this way, during use of the battery cell 600, due to the swelling of the electrode assembly 20, a zone with lower strength around the weld pool structure R, that is, a boundary position between the protrusion 122 and the end cover body 121, is more susceptible to the swelling stress. On this basis, due to the small size of the protrusion 122 itself, the structural strength at the protrusion 122 is further reduced, accelerating the risk of cracking or even fracturing at a position of the protrusion 122 and affecting the reliability and service life of the battery cell 600.

In view of this, the laser irradiation mode during the welding is adjusted in an embodiment of this application, thereby changing the shape and size of the weld pool structure R and contributing to reducing the risk of cracking of the battery cell 600. Specifically, in a radial direction Y of the opening K, the weld pool structure R is exposed on an outer surface of the shell 11 and penetrates deep into the end cover body 121. The "radial direction Y" mentioned here refers to any direction passing through the center of the opening K and perpendicular to the first direction X. For example, when the projection shape of the opening K in the first direction X is a circle, the radial direction Y may be a radial direction of the circle. When the projection shape of the opening K in the first direction X is of a rectangular structure, a trapezoid structure, or the like, the radial direction Y may be a radial direction of a circumcircle of the trapezoid or rectangle.

Besides, "the weld pool structure R is exposed on an outer surface of the shell 11" mentioned in the embodiment of this application means that the outer surface of the weld pool structure R can be observed from the outer peripheral side of the shell 11 along the radial direction Y The outer surface of the weld pool structure R may protrude from the outer surface of the shell 11, or may be recessed or flush with the outer surface of the shell 11, as long as the weld pool structure R can be observed from the outer peripheral side of the shell 11 along the radial direction Y

Further, the weld pool structure R may also penetrate deep into the end cover body 121, that is, the weld pool structure R can directly fix the shell 11 to the end cover body 121 through welding. To meet the size and shape requirements of the foregoing weld pool structure R, during the welding between the end cover 12 and the shell 11, it is necessary to irradiate the laser from the outer peripheral side of the shell 11 to the vicinity of the boundary position between the shell 11 and the end cover 12 along the radial direction Y, where the arrow direction in FIG. 6 can indicate the irradiation direction of the laser. This design allows the formed weld pool structure R to penetrate deep into the end cover body 121, which means that the weld pool structure R can include a partial structure of the end cover body 121, helping to increase an overall size of the weld pool structure R and improve the welding strength between the shell 11 and the end cover 12. In addition, at least part of a zone with a fragile strength in the vicinity of the weld pool structure R can be located on the end cover body 121, and since the end cover body 121 usually has a large thickness and strength, this helps to reduce the risk of cracking or even fracturing in the zone with a fragile strength in the vicinity of the weld pool structure R and improve the reliability and service life of the battery cell 600.

In some embodiments, as shown in FIG. 6, in a direction from the outer surface of the shell 11 to an inner surface of the shell 11, the weld pool structure R tends to decrease gradually in size.

It can be learned from the foregoing content that to improve the welding strength between the shell 11 and the end cover 12 of the battery cell 600 and reduce the risk of cracking of the housing 10 due to the swelling of the electrode assembly 20, the welding mode between the end cover 12 and the shell 11 changes in an embodiment of this application, so that the laser is irradiated from the outer peripheral side of the shell 11 to the vicinity of the boundary position between the shell 11 and the end cover 12 along the radial direction Y, and the formed weld pool structure R can penetrate deep into the end cover body 121.

Further, the weld pool structure R finally formed in the embodiments of this application is usually different from the weld pool structure R in the related art. Specifically, in the embodiments of this application, the weld pool structure R penetrates deep into the end cover body 121 in the radial direction Y Therefore, in the direction from the outer surface of the shell 11 to the inner surface of the shell 11, the weld pool structure R tends to decrease gradually in size.

Compared with an solution in the related art in which the weld pool structure R penetrates deep into the shell 11 in the first direction X, this design can reduce the impact of the weld pool structure R on the shell 11, thereby reducing the exposed size of the weld pool structure R on the outer surface of the shell 11, improving the flatness of the outer surface of the shell 11, and improving the appearance of the battery cell 600. In addition, in the direction from the outer surface of the shell 11 to the inner surface of the shell 11, the weld pool structure R tends to decrease gradually in size, which therefore helps to reduce a structural size of the weld pool structure R extending to the deep center of the end cover body 121, thereby reducing the impact of the weld pool structure R on the central position of the end cover body 121 and improving the structural reliability of the end cover body 121.

In some embodiments, as shown in FIG. 6, the shell 11 includes a first plate body 111, the first plate body 111 is fixed to the end cover 12, and the weld pool structure R is arranged beyond an inner surface of the first plate body 111. In the radial direction Y of the opening K, a largest size of the weld pool structure R is denoted as H1, a size of the first plate body 111 is denoted as H2, and H1 and H2 satisfy that H2 + 0.15 mm ≤ H1 ≤ 3 mm.

The first plate body 111 is located at an end position of the shell 11, and can be used to enclose the opening K, where at least a partial structure of the first plate body 111 can be configured to be fixed to the end cover 12 through welding. In the radial direction Y of the opening K, a size of the first plate body 111 is denoted as H2, which means that thickness of the first plate body 111 is H2. It should be noted that, according to actual requirements of different battery cells 600, thickness sizes at various positions of the shell 11 may be equal, or thicknesses at different positions of the shell 11 may be unequal.

The size and shape of the first plate body 111 can take various forms. For example, before the end cover 12 is welded to the shell 11, an outer surface of the protrusion 122 in the end cover 12 in the radial direction Y may be arranged beyond an outer surface of the first plate body 111, or an outer surface of the protrusion 122 in the radial direction Y may be recessed relative to or flush with the outer surface of the first plate body 111.

In the radial direction Y of the opening K, the largest size of the weld pool structure R is denoted as H1, which means that H1 is the largest weld depth of the weld pool structure R. It can be learned from the foregoing content that the weld pool structure R needs to penetrate deep into the end cover body 121, so the largest size H1 corresponding to the weld pool structure R needs to be greater than the thickness size H2 of the first plate body 111. Further, in the embodiments of this application, H1 is set to be not less than H2 + 0.15 mm, so that the weld pool structure R can penetrate deep into the end cover body 121, thereby implementing the weld fusion between the end cover body 121 and the first plate body 111 and improving the reliability of the battery cell 600.

In addition, in the embodiments of this application, H1 is set to be not greater than 3 mm, so as to reduce a risk of serious deformation of the welded shell 11 caused by excessive energy input during welding due to an excessive penetration depth of the weld pool structure R, and improve the structural reliability of the shell 11 in the battery cell 600.

In some embodiments, in the radial direction Y of the opening K, the weld pool structure R extends a size of H3 from an outer surface of the end cover body 121 to the outer surface of the first plate body 111, and H2 and H3 satisfy that H3 ≤ H2 + 0.5 mm. Optionally, a value of H3-H2 is one of 0.1 mm, 0.2 mm, 0.25 mm, 0.4 mm, and 0.5 mm.

After the shell 11 is fixed to the end cover 12 through welding, an effective weld depth size in the weld pool structure R for the effect of fixing through welding corresponds to H3. In the process of producing the shell 11 and the end cover 12, to meet the requirements for assembling the shell 11 and the end cover 12, it is usually necessary to set a projection size of the end cover body 121 in the first direction X to be smaller than a projection size of the opening K in the first direction X, so that the end cover body 121 can be inserted into the opening K. Under this design, in the radial direction Y of the opening K, a gap space is present between the outer surface of the end cover body 121 and the inner surface of the first plate body 111, which means that the effective weld depth H3 is greater than the thickness H2 of the first plate body 111. Further, a value of H3-H2 is just a size of the gap space between the end cover body 121 and the first plate body 111 in the radial direction Y, and the value of H3-H2 usually affects the preparation of the weld pool structure R to be formed.

Specifically, during the welding of the end cover 12 to the shell 11, a partial structure of the shell 11 is melted into a liquid structure, a partial structures of the end cover 12 is also melted into a liquid structure, and the liquid structure corresponding to the shell 11 and the liquid structure corresponding to the end cover 12 blend with each other and solidify to form the weld pool structure R. During this process, if the size H3-H2 of the gap space in the radial direction Y is too large, the liquid structure formed from the melting of the shell 11 and the liquid structure formed from the melting of the end cover 12 may fall from the gap space, which is likely to damage the structure of the electrode assembly 20 and is not conducive to the yield of battery cells 600. In addition, the weld pool structure R may have structural defects in the gap space, compromising the welding reliability between the end cover 12 and the shell 11, which may easily adversely affect the use of the battery cell 600.

In view of this, in the embodiments of this application, H3 ≤ H2 + 0.5 mm is set. In other words, the size of the gap space formed between the end cover body 121 and the first plate body 111 in the radial direction Y is set to be not greater than 0.5 mm, so as to reduce the risk of a liquid molten structure falling off in the gap space during the melting process, reduce the adverse impact of the welding process on the electrode assembly 20, and help to improve the structural reliability of the finally formed weld pool structure R in the gap space, thereby improving welding strength between the end cover 12 and the shell 11.

In some embodiments, as shown in FIG. 6, the weld pool structure R extends to an upper surface of the end cover 12 far away from the shell 11. In the radial direction Y of the opening K, a size of the first plate body 111 is denoted as H2. In the first direction X, a largest size of the weld pool structure R is denoted as L1, the largest size of the end cover body 121 is denoted as L3, and L1, L3 and H2 satisfy that L1 ≤ L3 + 2H2.

The largest size L1 of the weld pool structure R in the first direction X is the largest weld width of the weld pool structure R. Generally, the largest size L1 of the weld pool structure R in the first direction X is positively correlated with the largest size H1 of the weld pool structure R in the radial direction Y In other words, a greater largest size H1 of the weld pool structure R in the radial direction Y results that the largest size L1 of the weld pool structure R in the first direction X increases accordingly.

Further, the weld pool structure R extends to the upper surface of the end cover 12 far away from the shell 11. In other words, during the welding, the weld pool structure R can reach the upper surface of the protrusion 122, and the weld pool structure R can extend from the protrusion 122 to the first plate body 111 in the first direction X, so that at least a partial structure of the first plate body 111 and at least a partial structure of the protrusion 122 can be fused into an entirety, thereby improving the welding strength between the end cover 12 and the shell 11. In some optional embodiments, in the first direction X, the size of the protrusion is denoted as L2, where L2 + 0.1 mm ≤ L1.

If the largest size L1 of the weld pool structure R in the first direction X is too large, it is likely to cause the liquid molten structure formed during the welding to partially flow to the side of the end cover body 121 facing the electrode assembly 20, which may easily adversely affect the electrode assembly 20, and there may be some welding defects. In view of this, in the embodiments of this application, L1 is further set to be not greater than the size L3 + 2H2 of the end cover body 121 in the first direction X, where the size L3 of the end cover body 121 in the first direction X may alternatively be the size of the whole end cover 12 in the first direction X. This design can reduce the risk of the liquid molten structure formed during the welding flowing to a side of the end cover body 121 facing the electrode assembly 20, reduce the impact of the welding process on the electrode assembly 20 and other parts, and improve the preparation yield of battery cells 600.

To sum up, in the embodiments of this application, L1 is set to be not greater than L3 + 2H2, so as to reduce the risk of the liquid molten structure formed during the welding flowing to the side of the end cover body 121 facing the electrode assembly 20, reduce the impact of the welding process on the electrode assembly 20 and other parts, and improve the preparation yield of battery cells 600.

In some embodiments, as shown in FIG. 6, the weld pool structure R includes a first weld pool portion R1 located in the end cover 12, and a size of the first weld pool portion R1 in the first direction X is denoted as L4, and L4 and L2 satisfy that L2 + 0.05 mm ≤ L4 ≤ L2 + 0.5 mm. Optionally, L4 is one of L2 + 0.05 mm, L2 + 0.1 mm, L2 + 0.2 mm, L2 + 0.3 mm, and L2 + 0.5 mm.

The first weld pool portion R1 is a partial structure of the weld pool structure R located in the end cover 12, where the first weld pool portion R1 may be partially located in the protrusion 122 and partially located in the end cover body 121. Further, the size L4 of the first weld pool portion R1 in the first direction X is an effective weld width of the weld pool structure R that can achieve the welding effect. On this basis, if the size L4 of the first weld pool portion R1 in the first direction X is less than or equal to the size L2 of the protrusion 122 in the first direction X, the laser may only irradiate to the protrusion 122 from the outer peripheral side of the shell 11 but not to the shell 11 during the welding, leading to a failure in fixing the shell 11 to the end cover 12 through welding or an excessively low welding strength between the end cover 12 and the shell 11.

In view of this, in the embodiments of this application, L4 is set to be not less than L2 + 0.05 mm, so as to ensure that the laser can irradiate to the shell 11 within the manufacturing tolerance of the top cover, thereby achieving simultaneous fusion welding of the shell 11 and the end cover 12 and improving the welding strength therebetween. In addition, in the embodiments of this application, L4 is further set to be not greater than L2 + 0.5 mm, so as to reduce a risk of serious deformation of the welded shell 11 caused by excessive energy input during welding due to an excessive size of the first weld pool portion R1, and improve the structural reliability of the shell 11 in the battery cell 600.

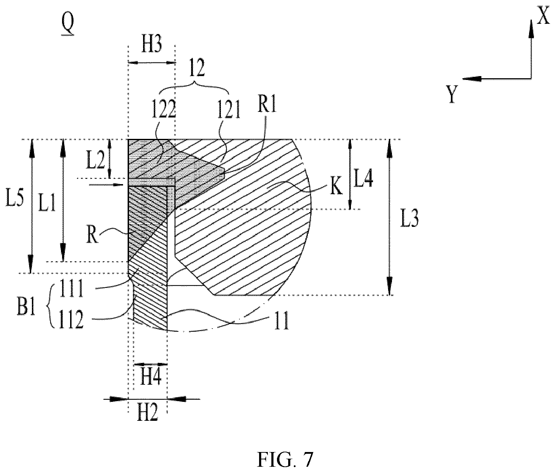

In some embodiments, referring to FIG. 7, the shell 11 includes a first plate body 111 and a second plate body 112, where the first plate body 111 is located on a side of the second plate body 112 close to the opening K, the weld pool structure R is partially located in the first plate body 111, and thickness of the first plate body 111 is greater than that of the second plate body 112.

The first plate body 111 and the second plate body 112 are arranged side by side in the first direction X. The first plate body 111 and the second plate body 112 are different in thickness, which means that the first plate body 111 and the second plate body 112 are different in size in the radial direction Y of the opening K. The inner surface of the first plate body 111 facing the electrode assembly 20 may protrude outward relative to an inner surface of the second plate body 112 facing the electrode assembly 20, so that the thickness of the first plate body 111 is greater than that of the second plate body 112; and/or an outer surface of the first plate body 111 facing away from the electrode assembly 20 may protrude outward relative to an outer surface of the second plate body 112 facing away from the electrode assembly 20, so that the thickness of the first plate body 111 is greater than that of the second plate body 112.

Further, the first plate body 111 and the second plate body 112 may abut against each other in the first direction X, or the first plate body 111 and the second plate body 112 may be spaced apart in the first direction X, with a transition portion therebetween for transitioning and securing the first plate body 111 and the second plate body 112.

In the embodiments of this application, the structure of the shell 11 is adjusted so that the thickness of the first plate body 111 used for welding in the shell 11 is greater than that of the first plate body 111, which can improve the welding strength between the shell 11 and the end cover 12 and improve the reliability of the battery cell 600.

It should be noted that, for battery cells 600 with different shapes, the shell 11 may include a plurality of different side plates in an axial direction, where at least some of the side plates may include a first plate body 111 and a second plate body 112 that have different thicknesses, while the thicknesses of other side plates at different positions may be equal or may be unequal.

In some embodiments, in the first direction X, the first plate body 111 is located on a side of the electrode assembly 20 facing the opening K.

It can be learned from the foregoing content that the thickness of the first plate body 111 is greater than that of the second plate body 112. On this basis, if the electrode assembly 20 and at least a partial structure of the first plate body 11 are located at the same height in the first direction X, the electrode assembly 20 may be oversized due to swelling during the use of the battery cell 600. In this case, if the inner surface of the first plate body 111 is arranged beyond the inner surface of the second plate body 112, the swelled electrode assembly 20 is likely to come into contact with the inner surface of the first plate body 111, and stress concentration can easily occur between the electrode assembly 20 and the first plate body 111, easily leading to the problem of lithium precipitation and affecting the normal use of the battery cell 600.

In view of this, in the embodiments of this application, the first plate body 111 is arranged on the side of the electrode assembly 20 facing the opening K in the first direction X, so that the first plate body 111 and the electrode assembly 20 are located at positions of different heights in the first direction X, thereby reducing the probability of contact between the electrode assembly 20 and the first plate body 111 due to the swelling of the electrode assembly 20, reducing the risk of stress concentration at the first plate body 111, and improving the use reliability of the battery cell 600.

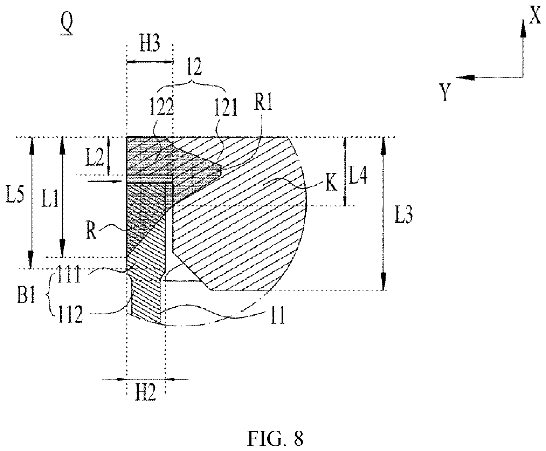

In some embodiments, referring to FIG. 8, the inner surface of the first plate body 111 is arranged beyond an inner surface of the second plate body 112, in the first direction X, a size of the first plate body 111 is denoted as L5, and L5 satisfies that L5 ≤ 10 mm.

To make the thickness of the first plate body 111 greater than that of the second plate body 112, in the embodiments of this application, the inner surface of the first plate body 111 is arranged beyond the inner surface of the second plate body 112, which helps to improve the welding strength between the shell 11 and the end cover 12 and improve the reliability of the battery cell 600.

However, during the use of the battery cell 600, the electrode assembly 20 swells. On this basis, if the size L5 of the first plate body 111 in the first direction X is too large, at least a partial structure of the first plate body 111 and the electrode assembly 200 are located at the same height in the first direction X, such that contact interference between the electrode assembly 20 and the first plate body 111 can easily occur during the swelling of the electrode assembly 20, and stress concentration can easily occur between the electrode assembly 20 and the first plate body 111, easily leading to the problem of lithium precipitation and affecting the normal use of the battery cell 600.

In view of this, in the embodiments of this application, L5 is set to be not greater than 10 mm, which reduces the risk of contact interference between the electrode assembly 20 and the first plate body 111 due to the swelling of the electrode assembly 20, thereby reducing the probability of stress concentration between the electrode assembly 20 and the first plate body 111, further reducing the probability of occurrence of lithium precipitation, and improving the use reliability of the battery cell 600.

It should be noted that in the embodiments of this application, the outer surface of the first plate body 111 may be arranged beyond the outer surface of the second plate body 112, or the outer surface of the first plate body 111 may be flush with or recessed relative to the outer surface of the second plate body 112.

In some embodiments, as shown in FIG. 7, the outer surface of the first plate body 111 is arranged beyond the outer surface of the second plate body 112, in the first direction X, a size of the first plate body 111 is denoted as L5, and L5 satisfies that L5 ≤ 15 mm.

It can be learned from the foregoing content that in addition to adjusting the inner surface of the first plate body 111 to be beyond the inner surface of the second plate body 112 so that the thickness of the first plate body 111 is greater than that of the second plate body 112, the outer surface of the first plate body 111 can also be arranged beyond the outer surface of the second plate body 112 so that the thickness of the first plate body 111 is greater than that of the second plate body 112.

On this basis, if the size L5 of the first plate body 111 in the first direction X is too large, during assembly of the battery cell 600, a partial structure of the first plate body 111 in the battery cell 600 protruding outward is prone to collision and wear with other battery cells 600 or other components, resulting in local stress concentration, leading to early cracking at the welding position of the first plate body 111 and affecting the service life of the battery cell 600.

Therefore, in the embodiments of this application, the size L5 of the first plate body 111 in the first direction X is limited so that L5 is not greater than 15 mm, thereby reducing the risk of collision and interference between the partial structure of the first plate body 111 protruding outward and other external components, and improving the use reliability of the battery cell 600.

It should be noted that in the battery module 500, one or a plurality of battery cells 600 may be provided. Refer to FIG. 6, and FIG. 9 to FIG. 11. If there are a plurality of battery cells 600, the plurality of battery cells 600 are arranged side by side, and to reduce mutual influence between different battery cells 600, heat insulation pads 30 are also arranged between adjacent battery cells 600. The heat insulation pad 30 can reduce the heat transfer between different battery cells 600 and physically separate different battery cells 600. Further optionally, the first plate body 111 is located on one side of the heat insulation pad 30 in the first direction X, that is, the first plate body 111 and the heat insulation pad 30 are not located at the same height in the first direction X, so as to achieve the avoidance effect of the first plate body 111 on the heat insulation pad 30 and reduce the risk of stress concentration therebetween.

In some embodiments, as shown in FIG. 7, the thickness of the first plate body 111 is denoted as H2, and the thickness of the second plate body 112 is denoted as H4, and H2 and H4 satisfy that H4 < H2 ≤ 1.8H4. Optionally, H2 is one of 1.1H4, 1.2H4, 1.5H4, 1.6H4, and 1.8H4.

The thickness H2 of the first plate body 111 is the size of the first plate body 111 in the radial direction Y, and the thickness H4 of the second plate body 112 is the size of the second plate body 112 in the radial direction Y In the embodiments of this application, the thickness H2 of the first plate body 111 is set to be greater than the thickness H4 of the second plate body 112, so that the welding strength between the shell 11 and the end cover 12 can be improved, and the reliability of the battery cell 600 can be improved. In addition, H2 is also set to be not greater than 1.8H4, so as to meet the feasibility of forming the first plate body 111 and the second plate body 112 and reduce the difficulty of preparing the shell 11.

In some embodiments, as shown in FIG. 7, a structure of the weld pool structure R located in the shell 11 is not arranged beyond the first plate body 111.

Generally, the strength of the housing 10 in the vicinity of the weld pool structure R is low. On this basis, if the weld pool structure R extends into the second plate body 112, cracks are likely to occur at the second plate body 112 when the electrode assembly 20 swells. Further, because the thickness of the second plate body 112 is relatively thin with respect to the thickness of the first plate body 111, the generated cracks are likely to completely penetrate through the second plate body 112 in the radial direction Y, thereby completely cracking the shell 11 and affecting the use reliability of the battery cell 600.

In view of this, in the embodiments of this application, the structure of the weld pool structure R located in the shell 11 is not arranged beyond the first plate body 111, which means that the weld pool structure R does not extend into the second plate body 112. In this case, when the electrode assembly 20 swells, cracks are more likely to occur in the first plate body 111, and the cracks generated need to penetrate through the first plate body 111 in the radial direction Y to break the shell 11. Therefore, this design helps to increase a crack path length corresponding to the cracks caused by the swelling of the electrode assembly 20 in the vicinity of the weld pool structure R and improve the use reliability of the battery cell 600.

Similarly, a second edge E2 is partially located in the end cover body 121. The end cover body 121 may be larger than the protrusion 122 in size, thus similarly increasing the cracking path length corresponding to the vicinity of the second edge E2, and improving the use reliability of the battery cell 600.

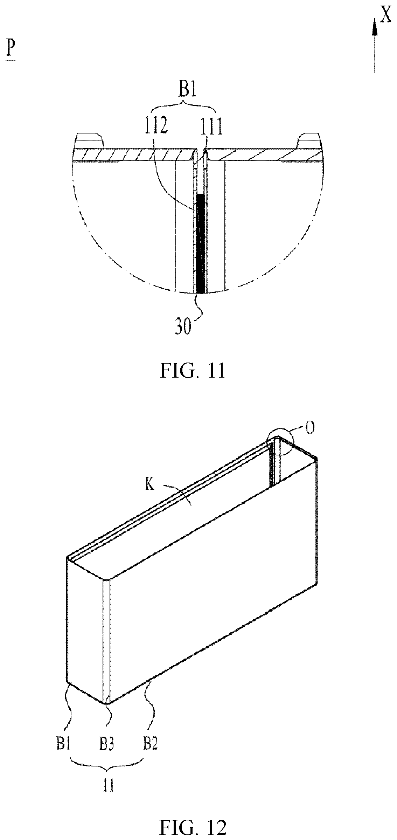

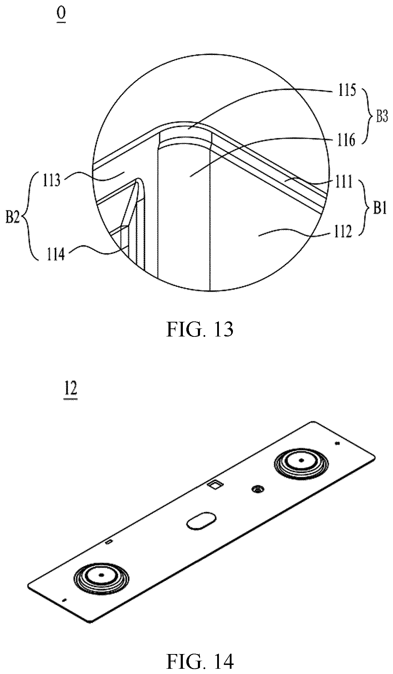

In some embodiments, referring to FIG. 12 and FIG. 13, the shell 11 includes a first side plate B1, a second side plate B2, and a connecting plate B3 connecting the first side plate B1 and the second side plate B2, that are arranged in a circumferential direction, and the connecting plate B3 includes an arc structure. The first side plate B1 includes a first plate body 111 and a second plate body 112, the first plate body 111 being located on a side of the second plate body 112 close to the opening K; the second side plate B2 includes a third plate body 113 and a fourth plate body 114, the third plate body 113 being located on a side of the fourth plate body 114 close to the opening K; and the connecting plate B3 includes a fifth plate body 115 and a sixth plate body 116, the fifth plate body 115 being located on a side of the sixth plate body 116 close to the opening K. Thickness of the first plate body 111 is greater than that of the second plate body 112; and/or thickness of the third plate body 113 is greater than that of the fourth plate body 114; and/or thickness of the fifth plate body 115 is greater than that of the sixth plate body 116.

The first side plate B1 may be provided in one or more, and the number may be set according to the shape of the shell 11. Similarly, the second side plate B2 may be provided in one or more, and the number may be set according to the shape of the shell 11. Depending on the specific shape of the shell 11, the outer surface size of the first side plate B1 may be larger than that of the second side plate B2, or the outer surface size of the first side plate B1 may be smaller than or equal to that of the second side plate B2.

The first side plate B1 and the second side plate B2 are respectively arranged at different sides of the opening K, and the connecting plate B3 is used for connecting the first side plate B1 and the second side plate B2. Further, the connecting plate B3 includes an arc structure. Optionally, an outer surface of the connecting plate B3 may include an arc surface, and an inner surface of the connecting plate B3 may also include an arc surface. The number of connecting plates B3 is generally determined by the first side plate B1 and the second side plate B2 together. If the shell 11 only includes one first side plate B1 and one second side plate B2, the number of connecting plates B3 is one. If the shell 11 includes one first side plate B1 and two second side plates B2, two connecting plates B3 are provided and respectively located on two sides of the first side plate B1. If the shell 11 includes two first side plates B1 and two second side plates B2, the number of connecting plates B3 is four, and four connecting plates B3 are used to implement the sequential end-to-end connection of the two first side plates B1 and the two second side plates B2.

The first side plate B1 includes a first plate body 111 and a second plate body 112, and the thickness of the first plate body 111 may be greater than or equal to that of the second plate body 112. The second side plate B2 includes a third plate body 113 and a fourth plate body 114, and the thickness of the third plate body 113 may be greater than or equal to that of the fourth plate body 114. The connecting plate B3 includes a fifth plate body 115 and a sixth plate body 116, and the thickness of the fifth plate body 115 may be greater than or equal to that of the sixth plate body 116.

Due to the existence of the weld pool structure R, other positions in the vicinity of the position of the weld pool structure R are structures with a fragile strength. Specifically, a zone with a fragile strength is present in at least one of the first plate body 111, the third plate body 113, and the fifth plate body 115. On this basis, the first plate body 111, the third plate body 113, and the fifth plate body 115 are adjusted in thickness in the embodiments of this application, so that the size of at least one of the first plate body 111, the third plate body 113, and the fifth plate body 115 is relatively increased, thereby improving the structural reliability of the battery cell 600.

For example, if a zone with a fragile strength is present in only the first plate body 111, the first plate body 111 can be thickened without the need to thicken the third plate body 113 and the fifth plate body 115. In this case, the thickness of the first plate body 111 is greater than the thickness of the third plate body 113 and the thickness of the fifth plate body 115.

Alternatively, in some other optional embodiments, two of the first plate body 111, the third plate body 113, and the fifth plate body 115 can be selectively thickened so that the two plate bodies are greater than the remaining one plate body in thickness.

Alternatively, in some other embodiments, the first plate body 111, the third plate body 113, and the fifth plate body 115 can all be thickened, but depending on the use requirements, the sizes of thickening corresponding to the first plate body 111, the third plate body 113, and the fifth plate body 115 are the same or different, so as to better match the strength requirements of different plate bodies and make the strength of the three plate bodies as consistent as possible.

In the embodiments of this application, at least one of the first plate body 111, the third plate body 113, and the fifth plate body 115 can be selectively thickened according to the different positions of the weak zones on the shell 11, so as to reinforce the strength of the shell 11. In addition, compared with a solution of overall thickening, only partial thickening is adopted in the embodiments of this application, which helps to reduce material waste and the occupation of the space for the electrode assembly 20.

It should be noted that although the first plate body 111 is located on the side of the second plate body 112 close to the opening K, a side of the first plate body 111 facing away from the second plate body 112 may or may not be provided with other plate structures. Optionally, the side of the first plate body 111 facing away from the second plate body 112 may be provided with a plate structure with a smaller thickness, and an inner surface of the plate structure is recessed relative to the inner surface of the first plate body 111 to form a recess. The recess can be used to accommodate the end cover 12, so as to reduce the difficulty of assembly between the shell 11 and the end cover 12.

In some embodiments, the thickness of the first plate body 111 is greater than that of the second plate body 112, the thickness of the third plate body 113 is greater than that of the fourth plate body 114, and the thickness difference between the first plate body 111 and the second plate body 112 is the same as that between the third plate body 113 and the fourth plate body 114; and/or, the thickness of the first plate body 111 is greater than that of the second plate body 112, the thickness of the fifth plate body 115 is greater than that of the sixth plate body 116, and the thickness difference between the first plate body 111 and the second plate body 112 is the same as that between the fifth plate body 115 and the sixth plate body 116.

In the embodiments of this application, the thickness difference between the first plate body 111 and the second plate body 112 is a size of the thickening of the first plate body 111 relative to the second plate body 112. On this basis, setting the size of the thickening of the first plate body 111 to be equal to the size of the thickening of the third plate body 113 can reduce the difficulty of preparing the first plate body 111 and the third plate body 113. Alternatively, the size of the thickening of the first plate body 111 can be set to be equal to the size of the thickening of the fifth plate body 115, which helps to reduce the difficulty of preparing the first plate body 111 and the fifth plate body 115.

In some embodiments, the shell 11 includes a first plate body 111, the first plate body 111 is fixed to the end cover 12, and thickness of the end cover body 121 is greater than that of the first plate body 111.

Refer to FIG. 8. Thickness of the end cover body 121 refers to a size L3 of the end cover body 121 in the first direction X, while thickness of the first plate body 111 refers to a size H2 of the first plate body 111 in the second direction Y In the embodiments of this application, due to the thickness of the end cover body 121 being greater than that of the first plate body 111, the end cover body 121 can have greater structural strength than the first plate body 111. On this basis, in the embodiments of this application, the welding mode changes, and the morphology of the weld pool structure R changes, so that at least some zones with a fragile strength in the vicinity of the weld pool structure R can be located on the end cover body 121, which helps to reduce the risk of cracking or even fracturing in the zones with a fragile strength in the vicinity of the weld pool structure R and improve the reliability and service life of the battery cell 600.

According to a second aspect, referring to FIG. 6 and FIG. 12, an embodiment of this application provides an end cover 12 of a battery cell 600. The end cover 12 includes an end cover body 121 and a protrusion 122, where the protrusion 122 is arranged to protrude from an outer peripheral surface of the end cover body 121 and is used for overlapping the shell 11, and both the protrusion 122 and the end cover body 121 are configured for welding with the shell 11 of the battery cell 600 to form a weld pool structure R.

In this embodiment of this application, in addition to the protrusion 122 in the end cover 12, which can be used to form the weld pool structure R, the end cover body 121 can also be used to form the weld pool structure R. This helps to further improve the welding strength between the shell 11 and the end cover 12 and improve the reliability of the battery cell 600. In addition, zones with a fragile strength in the vicinity of the weld pool structure R can be located on the shell 11 or the end cover body 121 instead of on the protrusion 122, which reduces the risk of cracks or even fractures on the protrusion 122 due to an excessively small size of the protrusion 122, and further improves the reliability and service life of the battery cell 600.

According to a third aspect, an embodiment of this application provides a battery including the battery cell 600 according to any one of the foregoing embodiments.

It should be noted that the battery provided in this embodiment of this application has the beneficial effects of the battery cell 600 in any one of the foregoing embodiments. For specific details, reference is made to the foregoing description of the beneficial effects of the battery cell 600. Details are not repeated herein in this embodiment of this application.

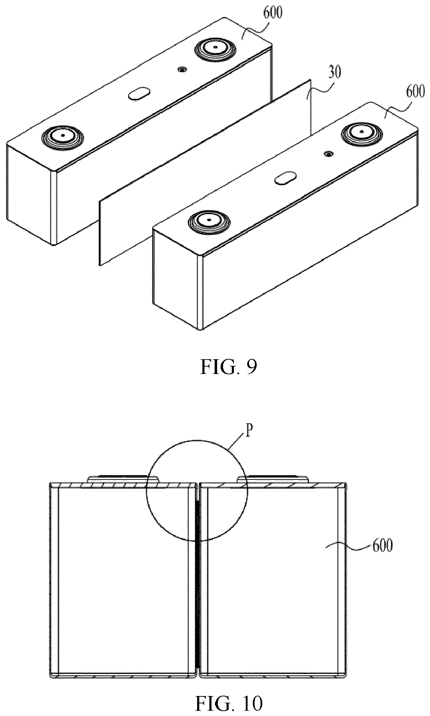

In some embodiments, referring to FIG. 10 and FIG. 11, the battery further includes a heat insulation pad 30 disposed between adjacent battery cells 600, where the shell 11 includes a first plate body 111 and a second plate body 112, the first plate body 111 being located on a side of the second plate body 112 closer to an opening K, and an outer peripheral surface of the first plate body is arranged to protrude from an outer peripheral surface of the second plate body. A projection of at least a partial structure of the heat insulation pad 30 in a first direction X is located between projections of two adjacent first plate bodies 111 in the adjacent battery cells 600 in the first direction X.

It can be learned from the foregoing content that the outer peripheral surface of the first plate body 111 is arranged to protrude from the outer peripheral surface of the second plate body 112, so that the thickness of the first plate body 111 may be greater than that of the first plate body 111, which can improve the welding strength between the shell 11 and the end cover 12.

On this basis, to reduce the risk of collision and damage between the first plates 111 corresponding to different battery cells 600, the heat insulation pad 30 is disposed between adjacent battery cells 600, and the projection of at least a partial structure of the heat insulation pad 30 in the first direction can be located between projections of first plate bodies 111 in different battery cells 600 in the first direction X, so that the first plate bodies 111 corresponding to different battery cells 600 can be separated by the heat insulation pads 30, thereby reducing the risk of collision and damage between the first plate bodies 111 corresponding to different battery cells 600.

In some embodiments, in the first direction X, at least a partial structure of the first plate body 111 is located on a side of the heat insulation pad 30; and/or the heat insulation pad 30 is provided with a recess A, and the first plate body 111 is at least partially embedded in the recess A.

In the first direction X, at least a partial structure of the first plate body 111 is located on a side of the heat insulation pad 30, that is, at least a partial structure of the first plate body 111 and the heat insulation pad 30 are located at positions of different heights in the first direction X. Optionally, as shown in FIG. 11, the entire structure of the first plate body 111 is located on a side of the heat insulation pad 30 in the first direction. With this design, different first plate bodies 111 can be spaced apart using the heat insulation pad 30, and it is also possible to avoid the heat insulation pad 30 from the first plate bodies 111, thereby reducing the risk of stress concentration between different first plate bodies 111.

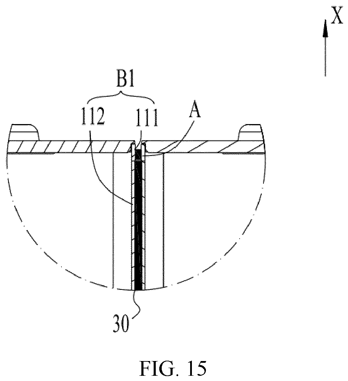

Alternatively, as shown in FIG. 15, the heat insulation pad 30 may also be provided with a recess A, and the first plate body 111 is at least partially embedded in the recess A. The presence of the recess A can also achieve the effect of avoiding the first plate body 11. In addition, this design enables a partial structure of the heat insulation pad 30 to be sandwiched between adjacent first plate bodies 111, thereby further reducing the risk of contact and collision between different first plate bodies 111.

According to a fourth aspect, an embodiment of this application provides an electric apparatus including the battery cell 600 according to any one of the foregoing embodiments, where the battery cell 600 is configured to supply electric energy.

According to some embodiments of this application, referring to FIG. 4, FIG. 5, FIG. 8, FIG. 12 and FIG. 13, the battery cell 600 includes a shell 11, an electrode assembly 20, and an end cover 12. An opening K is provided at an end of the shell 11 in a first direction X, and the electrode assembly 20 is accommodated in the shell 11. The shell 11 includes a first side plate B1, a second side plate B2, and a connecting plate B3 connecting the first side plate B1 and the second side plate B2, that are arranged in a circumferential direction, and the connecting plate B3 includes an arc structure. The first side plate B1 includes a first plate body 111 and a second plate body 112, the first plate body 111 being located on a side of the second plate body 112 close to the opening K; the second side plate B2 includes a third plate body 113 and a fourth plate body 114, the third plate body 113 being located on a side of the fourth plate body 114 close to the opening K; and the connecting plate B3 includes a fifth plate body 115 and a sixth plate body 116, the fifth plate body 115 being located on a side of the sixth plate body 116 close to the opening K. Thickness of the first plate body 111 is greater than that of the second plate body 112, and a thickness difference is present between at least two of the first plate body 111, the third plate body 113, and the fifth plate body 115.

The end cover 12 is configured to cover the opening K. The end cover 12 includes an end cover body 121 located in a projection of the opening K in the first direction X, and a protrusion 122 protruding from the end cover body 121 in a radial direction Y of the opening K. The end cover 12 is welded to the first plate body 111 to form a weld pool structure R. In the radial direction Y of the opening K, the weld pool structure R is exposed on an outer surface of the shell 11 and penetrates deep into the end cover body 121. In a direction from an outer surface of the shell 11 to an inner surface of the shell 11, the weld pool structure R tends to decrease gradually in size in the first direction. The weld pool structure R includes a first edge E1 and a second edge E2 that are opposite in the first direction X. The first edge E1 is located in the first plate body 111 and the second edge E2 is located in the end cover body 121.

The weld pool structure R is arranged beyond the inner surface of the first plate body 111. In the radial direction Y, the largest size of the weld pool structure R is denoted as H1, a size of the first plate body 111 is denoted as H2, and H1 and H2 satisfy that H2 + 15 mm ≤ H1 ≤ 3 mm.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell (600), **characterized by** comprising:
a shell (11), wherein an opening (K) is provided at an end of the shell (11) in a first direction (X);
an electrode assembly (20) accommodated in the shell (11); and
an end cover (12) configured to cover the opening (K), wherein the end cover (12) comprises an end cover body (121), a projection of the end cover body (121) in the first direction (X) is located in a projection of the opening (K) in the first direction (X), and the end cover (12) is welded to the shell (11) to form a weld pool structure (R); wherein
in a radial direction (Y) of the opening (K), the weld pool structure (R) is exposed on an outer surface of the shell (11) and penetrates deep into the end cover body (121).

2. The battery cell (600) according to claim 1, **characterized in that** in the radial direction (Y) of the opening (K) and in a direction from the outer surface of the shell (11) to an inner surface of the shell (11), the weld pool structure (R) tends to decrease gradually in size in the first direction (X).

3. The battery cell (600) according to claim 1 or 2, **characterized in that** the shell (11) comprises a first plate body (111), the first plate body (111) is fixed to the end cover (12), and the weld pool structure (R) is arranged beyond an inner surface of the first plate body (111); and
in the radial direction (Y) of the opening (K), a largest size of the weld pool structure (R) is denoted as H1, a size of the first plate body (111) is denoted as H2, and H1 and H2 satisfy that H2 + 0.15 mm ≤ H1 ≤ 3 mm.

4. The battery cell (600) according to any one of claims 1 to 3, **characterized in that** the shell (11) comprises a first plate body (111), wherein the first plate body (111) is fixed to the end cover (12), and in the radial direction (Y) of the opening (K), a size of the weld pool structure (R) extending from an outer surface of the end cover body (121) to an outer surface of the first plate body (111) is denoted as H3, a size of the first plate body (111) is denoted as H2, and H2 and H3 satisfy that H3 ≤ H2 + 0.5 mm;
and/or
**characterized in that** the shell (11) comprises a first plate body (111), the first plate body (111) is fixed to the end cover (12), and the weld pool structure (R) extends to an upper surface of the end cover (12) far away from the shell (11); and
in the radial direction (Y) of the opening (K), a size of the first plate body (111) is denoted as H2, in the first direction (X), the largest size of the weld pool structure (R) is denoted as L1, the largest size of the end cover body (121) is denoted as L3, and L1, L3 and H2 satisfy that L1 ≤ L3 + 2H2.

5. The battery cell (600) according to any one of claims 1 to 4, **characterized in that** the shell (11) comprises a first plate body (111) and a second plate body (112), the first plate body (111) being located on a side of the second plate body (112) close to the opening (K), and the weld pool structure (R) is partially located in the first plate body (111); and
thickness of the first plate body (111) is greater than that of the second plate body (112).

6. The battery cell (600) according to claim 5, **characterized in that** in the first direction (X), the first plate body (111) is located on a side of the electrode assembly (20) facing the opening (K);
and/or
**characterized in that** the inner surface of the first plate body (111) is arranged beyond an inner surface of the second plate body (112), in the first direction (X), a size of the first plate body (111) is denoted as L5, and L5 satisfies that L5 ≤ 10 mm.

7. The battery cell (600) according to any one of claims 5 to 6, **characterized in that** an outer surface of the first plate body (111) is arranged beyond an outer surface of the second plate body (112), in the first direction (X), a size of the first plate body (111) is denoted as L5, and L5 satisfies that L5 ≤ 15 mm;
and/or
**characterized in that** thickness of the first plate body (111) is denoted as H2, thickness of the second plate body (112) is denoted as H4, and H2 and H4 satisfy that H2 ≤ 1.8H4;
and/or
**characterized in that** a structure of the weld pool structure (R) located in the shell (11) is not arranged beyond the first plate body (111).

8. The battery cell (600) according to any one of claims 1 to 7, **characterized in that** the shell (11) comprises a first side plate (B1), a second side plate (B2), and a connecting plate (B3) connecting the first side plate (B1) and the second side plate (B2), that are arranged in a circumferential direction, and the connecting plate (B3) comprises an arc structure; and
the first side plate (B1) comprises a first plate body (111) and a second plate body (112), the first plate body (111) being located on a side of the second plate body (112) close to the opening (K); the second side plate (B2) comprises a third plate body (113) and a fourth plate body (114), the third plate body (113) being located on a side of the fourth plate body (114) close to the opening (K); and the connecting plate (B3) comprises a fifth plate body (115) and a sixth plate body (116), the fifth plate body (115) being located on a side of the sixth plate body (116) close to the opening (K);
wherein thickness of the first plate body (111) is greater than that of the second plate body (112); and/or thickness of the third plate body (113) is greater than that of the fourth plate body (114); and/or thickness of the fifth plate body (115) is greater than that of the sixth plate body (116).

9. The battery cell (600) according to claim 8, **characterized in that** the thickness of the first plate body (111) is greater than that of the second plate body (112), the thickness of the third plate body (113) is greater than that of the fourth plate body (114), and a thickness difference between the first plate body (111) and the second plate body (112) is the same as that between the third plate body (113) and the fourth plate body (114); and/or,
the thickness of the first plate body (111) is greater than that of the second plate body (112), the thickness of the fifth plate body (115) is greater than that of the sixth plate body (116), and a thickness difference between the first plate body (111) and the second plate body (112) is the same as that between the fifth plate body (115) and the sixth plate body (116).

10. The battery cell (600) according to any one of claims 1 to 9, **characterized in that** the shell (11) comprises the first plate body (111), the first plate body (111) is fixed to the end cover (12), and thickness of the end cover body (121) is greater than that of the first plate body (111).

11. An end cover (12) of a battery cell (600), **characterized by** comprising:
an end cover body (121);
a protrusion (122) arranged to protrude from an outer peripheral surface of the end cover body (121) and used for overlapping on the shell (11), wherein both the protrusion (122) and the end cover body (121) are configured for welding with the shell (11) of the battery cell to form a weld pool structure (R).

12. A battery (100), **characterized by** comprising the battery cell (600) according to any one of claims 1 to 10.

13. The battery (100) according to claim 12, **characterized by** further comprising a heat insulation pad (30) disposed between adjacent battery cells (600), wherein the shell (11) comprises a first plate body (111) and a second plate body (112), the first plate body (111) being located on a side of the second plate body (112) close to the opening (K), and an outer peripheral surface of the first plate body (111) is arranged to protrude from an outer peripheral surface of the second plate body (112); and
a projection of at least a partial structure of the heat insulation pad (30) in the first direction (X) is located between projections of two adjacent first plate bodies (111) in the adjacent battery cells (600) in the first direction (X).

14. The battery (100) according to claim 13, **characterized in that** in the first direction (X), at least a partial structure of the first plate body (111) is located on a side of the heat insulation pad (30); and/or,
the heat insulation pad (30) is provided with a recess (A), and the first plate body (111) is at least partially embedded in the recess (A).

15. An electric apparatus, comprising the battery cell (600) according to any one of claims 1 to 10, wherein the battery cell (600) is configured to supply electric energy.
